# EUROPEAN PATENT SPECIFICATION

(11) **EP 2 430 232 B1**
(45) Date of publication and mention of the grant of the patent: **01.03.2017**
(21) Application number: 09787731.0
(22) Date of filing: 14.05.2009
(51) Int. Cl.: D06N 3/00, D06N 3/14, C08G 18/66, B32B 37/24, B32B 27/40

(54) **PRODUCTION METHOD OF SYNTHETIC AND COATED LEATHER IN GENERAL, USING MICRONIZED RESINS AND MICRONIZED POLYURETHANE RESIN**
HERSTELLUNGSVERFAHREN FÜR SYNTHETISCHES UND BESCHICHTETES LEDER IM ALLGEMEINEN UNTER EINSATZ VON MIKRONISIERTEN HARZEN SOWIE MIKRONISIERTES POLYURETHANHARZ
PROCÉDÉ DE PRODUCTION DE CUIR SYNTHÉTIQUE ET REVÊTU EN GÉNÉRAL, UTILISANT DES RÉSINES MICRONISÉES ET UNE RÉSINE POLYURÉTHANE MICRONISÉE

(43) Date of publication of application: 21.03.2012
(73) Proprietor: Dubini, Pietro Agostino, 20122 Milano (MI) (IT); Guerra, Claudio, 20813 Bovisio Masciago (MB) (IT)
(72) Inventor: DUBINI, Pietro Agostino, 20122 Milano (MI) (IT); GUERRA, Claudio, 20813 Bovisio Masciago (MB) (IT); NESTI, Mariano, 59100 Prato (PO) (IT); FRACASSINI, Paolo, 50018 Scandicci (FI) (IT)
(74) Representative: Mittler, Enrico
(86) International application number: PCT/IT2009/000213
(87) International publication number: WO 2010/131275

(56) References cited:
- EP-A1- 1 182 220
- DE-A1-102004 059 773
- GB-A- 1 103 833
- GB-A- 1 221 041
- US-A- 4 321 173
- US-B1- 6 410 638

## Description

The present patent application for industrial invention relates to a production method of synthetic and coated leather in general that differs from traditional methods in that it uses micronized resins (powders) instead of resins in solution diluted in various solvents (dimethyl-formamide, toluene, ethyl acetate, etc). This application also relates to a micronized polyurethane resin.

As it is known, synthetic or imitation leather is produced by using a polyurethane (PU) paste or compound dissolved in various solvents, mainly dimethyl-formamide (DMF). The fluid viscous product is spread on a support, usually embossed release paper, and coupled with fabric by means of second spreading, then the solvent is evaporated with heat until a solid product is obtained. The solidified imitation leather is removed from the embossed support, in such a way that the embossed patterns remain engraved.

This production process of imitation leather is characterised by several inconveniences, which are mainly due to the use of solvents.

Solvents are highly toxic and each spreading installation must be provided with a suitable system to purify and recover the solvents to guarantee the conditions requested by the workplace legislation. it must be noted that the costs of the said purification and recovery systems are considerably higher than the cost of the spreading installation.

In spite of the above, a modest amount of solvent is released by the chimneys of the purification system. The limitations imposed to the said emissions by the new legislations are so strict that they force imitation leather manufacturers to reduce production.

Also the production process is excessively expensive, due to the large waste of energy caused by heating and forced ventilation that are necessary to make solvents evaporate.

Moreover, the final product may be impaired by spreading defects due to the solvent evaporation, which is more difficult in case of deeper embossing.

US 4321173 discloses a method for the preparation of finely dispersed polyurethane ureas. The method comprises the steps of preparing a chain extended polyurethane from at least one diisocyanate, at least one polydiol, and diol chain extenders. The chain-extender component of the reaction is comprised of low molecular weight diols having side chains or ether groups, unbranched low molecular weight diols and/or monofunctional compounds.

GB 1221041 discloses a material comprising a sheet base to which is bonded a layer of fine of maximum diameter of less than 500 micrometers particles of a polyurethane elastomer. The particles may be mixed with other materials and may be bonded by a layer of polyurethane. Adhesive may be applied by spraying. The substrate may be a woven knitted or non-woven fabric and may be impregnated with a polymer.

DE 102004059773 discloses a textile which is coated with a layer of plastic material which is sintered. Thermoplastic is used, and is impressed by graining. It comprises several sintered layers. One layer is foamed. The surface of the plastic material has a leather grain or structure.

EP 1182220 discloses a composition for production of cover packing, comprising a blocked isocyanate, an active hydrogen group-containing compound having functional groups, an organic substance powder having an average particle diameter of 40 to 250 mu m, and an inorganic substance powder having an average particle diameter of less than 40 mu m.

GB 1103833 discloses a polyurethane polymer powders containing a minor proportion of a blocked isocyanate which is formed by mixing the polymer and blocked isocyanate in powder form, or adding the blocked isocyanate to a polyurethane solution and precipitating the polyurethane.

US 6410638 discloses a light-stable, sinterable particulate thermoplastic molding composition which consists essentially of a resinous blend of a thermoplastic polyurethane, and a member selected from at least one of a number of copolymers. The thermoplastic polyurethane is prepared from an aliphatic or cycloaliphatic diisocyanate.

The purpose of the present invention is to eliminate the inconveniences of the known technique, by devising a production method of synthetic and coated leather in general that is environmental-friendly, inexpensive and simple to make.

Another purpose of the present invention is to devise a micronized polyurethane resin especially suitable to the production of synthetic and coated leather in general.

These purposes are achieved by the present invention, with characteristics listed in the enclosed set of claims 1 to 8.

Advantageous embodiments are disclosed in the dependent claims.

The applicant made experimental tests on industrial spreading installations, by producing samples of imitation leather with a polymer in micro-ground powder status. During spreading the polymer behaved similarly to polyurethane compounds dissolved in solvents, which are largely used in the production of imitation leather.

The applicant surprisingly discovered that, also under agitation, in addition to contact with the blade of a spreading bench, the powder of a solid with dimensions ranging from 50 and 80 micrometers (microns) behaves in the same way as a liquid.

Following to the said experiments, the applicant started to study the possibility to produce solid polyurethane elastomers in chips, provided with suitable technical characteristics to be micro-ground with the use of known techniques. Other attempts to grind polyurethane elastomers had been previously made, using the cryogrinding technique, obtaining powders with dimensions higher than 250 micrometers (microns). However, powders with such a dimension cannot be spread.

The applicant made and tested numerous formulas of aromatic polyurethanes with diphenyl-methane-diisocyanate (MDI) using a mixture of diols with high molecular weight and glycols. Polycarbonates and polyadipates can be used as diols with high molecular weight, while butandiol, neopentylglycol, pentandiol and hexandiol can be used as glycols.

Polycarbonates with molecular weight from 500 to 2000 were used in the polycarbonate range. However, the best results were obtained with molecular weights between 500 and 1000, preferably 750. Also working with polyadipates, the best results were obtained with molecular weight between 500 and 1000, preferably 650.

The effect of the different glycols on the chemical-physical characteristics of the polyurethane polymer was studied and it was decided to use combinations of glycols as specified in the formulas of the following examples.

**EXAMPLE 1**

| Products | Weight (grams) |
|---|---|
| hexandiol polycarbonate with molecular weight 747 | 188,1 |
| hexandiol | 19,3 |
| neopentyl-glycol | 41,6 |
| benzoyl chloride | 0,4 |
| difenyl-methane-di-isocyanate in flakes | 205 |

A mixture composed of hexandiol polycarbonate with molecular weight 747, hexandiol and neopentyl-glycol is added with benzoyl chloride and heated to the temperature of 70°C. Then the mixture reacts with diphenyl-methane-diisocyanate in flakes.

The reaction mix is agitated for 3 minutes and then poured in a mould where the reaction is completed.

The product is ground after one week.

After some time the material is subjected to cryogrinding with a pin crusher in nitrogen stream at - 60°C.

It was verified that, with only one passage, more than 89% of the cryoground product has dimensions lower than 63 micrometers (micron).

**EXAMPLE 2**

| Products | Weight (grams) |
|---|---|
| adipate butandiol with molecular weight 678 g | 151,2 |
| hexandiol | 19.3 |
| neopentyl-glycol | 54,5 |
| benzoyl chloride | 0,4 |
| difenyl-methane-diisocyanate in flakes | 229 |

A mix composed of adipate butandiol with molecular weight 678, hexandiol and neopentylglycol, added with benzoyl chlorine g 0,4 heated to the temperature of 65 °C reacts with diphenyl-methane-diisocyanate in flakes.

The reaction mix is agitated for 3 minutes and then poured in a mould where the reaction is completed.

The product is ground after one week.

After some time the material is subjected to cryogrinding with a pin crusher in nitrogen stream at - 60°C.

It was verified that, with only one passage, 64 % of the cryoground product has dimensions lower than 63 micrometers (micron).

**EXAMPLE 3**

| Products | Weight (grams) |
|---|---|
| adipate butandiol with molecular weight 678 g | 241,4 |
| 1,4 butandiol | 26,6 |
| benzoyl chloride | 0,4 |
| difenyl-methane-diisocyanate in flakes | 164 |

A mix composed of adipate butandiol with molecular weight 678 and 1,4 butandiol is added with benzoyl chlorine g 0,4 and heated to the temperature of 65°C; then it reacts with diphenyl-methane-diisocyanate in flakes g 164.

The reaction mix is agitated for 3 minutes and then poured in a mould where the reaction is completed.

The product is ground after one week.

After some time the material is subjected to cryogrinding with a pin crusher in nitrogen stream at - 60°C.

It was verified that, with only one passage, 55 % of the cryoground product has dimensions lower than 63 micrometers (micron).

The formulas of the elastomeric polyurethane polymers indicated in the examples were produced in the laboratory to support the investigation activity, using the batch (i.e. discontinuous) method. Evidently, polyurethane formulas are industrially produced in continuous, using an extruder of known type normally used to production thermoplastic PU.

Once a polyurethane powder with particles from 50 to 80 micrometers (micron) is obtained, the powder is applied on a temporary support.

Although the following description refers specifically to polyurethane powder, the production method of synthetic and coated leather in general according to the invention can be implemented with any micronized resin.

An eventually discontinuous film is obtained from the powder applied on a temporary support (because the temporary support is provided with embossing) through sintering process. The powder polymer is heated to the melting temperature and maintained in liquid state for the time necessary to form a uniform, faultless layer. Then the melted product is cooled because it must solidify rapidly and removed from the temporary support after the hot-coupling with permanent supports of different type.

Existing production installations can be used with this new spreading method by making minor modifications with modest investments.

Using micronized powder resins, in particular with grain size from 50 to 80 micrometers (micron), it is possible to mix with a blade agitator directly with powder pigments. Moreover, spreading is easy, using a normal spreading bench with a hopper in front of the blade.

Embossed release paper can be used as temporary support. The advantage of using the powder polymer according to the invention becomes evident in this case. In fact, in case of embossed paper, the powder polymer can be spread with traditional spreading systems.

Once it has reached the molten state, the liquid extends and perfectly adheres to the embossing pattern, while the absence of solvent avoids spreading defects that may arise when using polymers in solution and that are due to solvent evaporation.

The micronized resin spread on smooth paper tends to slide under the blade. For this reason, embossed release paper must be used to obtain excellent results.

A different application system must be used with the use of smooth release paper, such as powder spreaders of known type.

It is clear that the use of a powder product, which is totally free from solvent, eliminates all problems related with the use of solvent.

In addition to the environmental advantage, the absence of solvent also ensures a considerable economic benefit. In fact, a standard spreading system

can be managed by saving on the quantity of heat to be supplied, since there is no solvent to evaporate and no large volume of hot air is needed, not being necessary to maintain the air/solvent ratio within safety limit values. Moreover, no purification and recovery installations are necessary for the solvent, which are twice as expensive as the spreading system.

Additional characteristics of the invention will appear clearer from the following detailed description, which refers to a merely illustrative, not limiting embodiment of the production process, illustrated in the enclosed drawings, wherein:

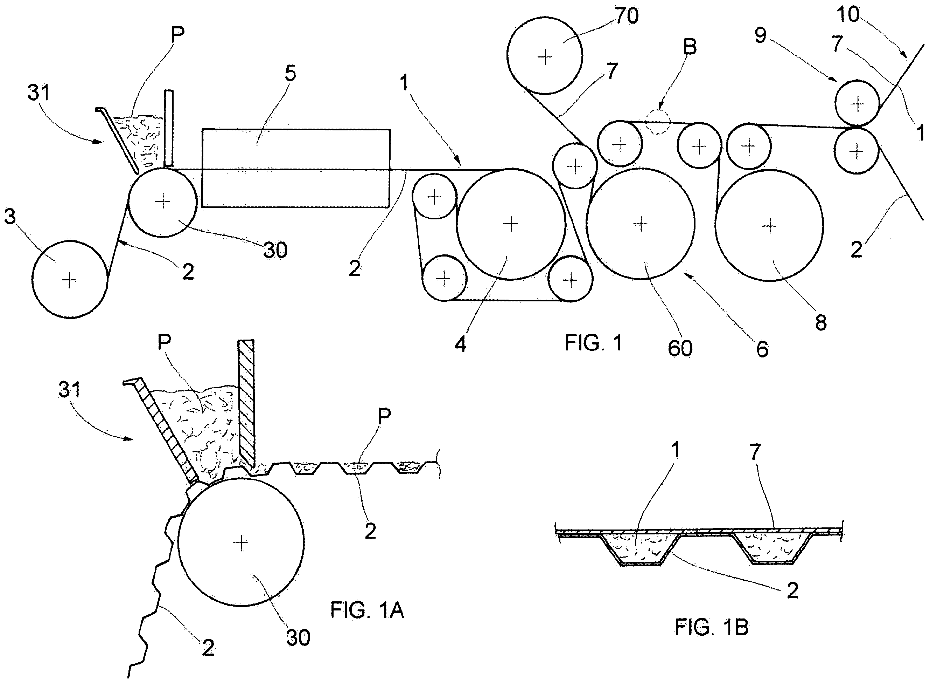

Fig. 1 is a diagrammatic view of a production installation of imitation leather according to a specific application of the invention;
Fig. 1A is an enlarged view of the spreading station of Fig. 1; and Fig. 1B is an enlarged view of the detail contained in circle B of Fig. 1.

With reference to the enclosed figures, this description continues by illustrating the production process of imitation leather according to the invention.

Although specific reference is made to polyurethane powder, for illustrative purposes, the production method of imitation leather according to the present invention can be implemented with any micronized resin, advantageously with particles lower than 120 micrometers (micron) and more advantageously with particles from 50 to 80 micrometers (micron).

Initially, granules of thermoplastic polyurethane polymer (TPU) are produced with the process and formulas contained in the aforementioned examples. The PU granules are micronized with pin crushers, with installations cooled with nitrogen at temperatures much lower than zero, approximately -60°C, to obtain powder with approximately 50 micrometers (micron) dimension.

Optionally, the PU powder can be coloured with powder pigments, which are added in percentages to be established according to the needs.

As shown in figs. 1 and 1A, the PU pigmented powder (P) is spread on
embossed release paper (2) available on the market in numerous different types in terms of quality of the release agent and pattern.

The spreading process of the powder (P) is carried out with conveyors that are provided with idler rolls (3) used to send the release paper (2) to a rubber roller (30) provided with a knife assembly (31) with a hopper and a blade that spreads the powder (P) on the release paper (2).

The release paper (2) coated with powder (P) is sent to an oven (5) with temperature set according to the powder characteristics. The powder (P) is heated to the PU softening point in such a way that the powders melt together to form a compact film by sintering. It must be noted that the PU formula has been studied in such a way to obtain a softening point lower than 160° to avoid heating the product to very high temperatures, and use any type of release paper, including with low resistance to high temperatures.

Heating in oven (5) will result in lower energy cost compared to traditional production methods, since it does not need forced ventilation to permit evaporation of solvents, and semi-static heat (i.e. infrared) is sufficient to bring the PU to the softening point, until it is correctly spread in the paper embossing. The heating in oven can be repeated several times to obtain different colour shades or thicknesses that cannot be achieved with a single passage. At the end of the oven process a film of sintered polyurethane (1) spread on release paper (2) is obtained.

It must be noted that embossed release paper with deep notches is used with difficulties for the production of imitation leather with solvent. In fact, the need to make the solvent evaporate requires the use of a limited quantity of polyurethane resin.

Coming out of the heated chamber of the oven (5) the sintered film (1) is sent to a cooled cylinder (4) designed to cool down the sintered resin.

The installation comprises a coupling system (6) to couple the PU sintered film (1) with various types of permanent supports (7), such as fabric,
non-woven fabric, and similar fabrics, which are unwound by a reel (70). For example, coupling is obtained by means of a calender assembly that comprises a cylinder (60) heated to a temperature suitable for coupling the PU sintered film (1). Also in this case, the temperature of the cylinder (60) must be close to the PU softening point and must avoid damaging the release paper (2). Fig. 1B illustrates a film coming out of the coupling installation (6).

After coupling, the material (PU sintered film (1) spread on release paper (2) and coupled with the support (7)) requires rapid cooling because the spread PU (1) must be brought back to crystallisation to remove the final product from the release paper (2). For instance, a cooling installation comprising a cooled cylinder (8) for coupled films (2,1, 7) can be used.

Finally, coming out of the cooling system (8), a separation unit (9) is provided, which separates the release paper (2) from the imitation leather (10) that is wound on a cylinder. Also the release paper (2) is wound on a cylinder in order to be reused.

Numerous variations and modifications can be made to the present embodiment of the invention by an expert of the field, while still falling within the scope of the invention as claimed in the enclosed claims.

## Claims

1. Production method of synthetic and coated leather in general using a polyurethane elastomeric polymer powder, comprising the following steps:
- spreading the powder (P) on embossed release paper (2),
- heating of powder (P) to the softening point to obtain an eventually discontinuous sintered film (1), and
- cooling of sintered film (1) in order to remove it from the temporary support (2), **characterized in that** the powder is composed by particles of dimension ranging between 50 and 80 micrometers (micron) and the production method does not comprise the use of solvent.

2. Method according to claim 1, **characterized in that** it comprises a coupling phase of the sintered film (1) with a permanent support (7).

3. Method according to claim 1, **characterized in that** said powder is obtained by:
- production of polyurethane elastomeric polymer granules, and
- cryogrinding said granules to obtain a powder (P) with dimensions comprised between 50 and 80 micrometers (micron).

4. Method according to claim 3, **characterized in that** said polyurethane elastomeric polymer granules are obtained by preparing a mixture of diols with high molecular weight and glycols that is heated and reacts with difenyl-methane-diisocyanate (MDI), the said mixture being poured in a mould in which the reaction is completed and the product is ground to obtain said granules.

5. Method according to claim 4, **characterized in that** said diols with high molecular weight comprise polycarbonates and/or polyadipates.

6. Method according to claim 5, **characterized in that** said polycarbonates have molecular weights comprised between 500 and 1000, preferably 750, and said polyadipates have molecular weights comprised between 500 and 1000, preferably 650.

7. Method according to claim 4, **characterized in that** said glycols comprise at least one of the following: butandiol, neopentyl-glycol, pentandiol and hexandiol.

8. Method according to claim 1, **characterized in that** said polyurethane elastomeric polymer powder comprises benzoyl chloride as additive.

## Patentansprüche

1. Herstellungsverfahren für synthetisches und beschichtetes Leder im Allgemeinen unter Verwendung eines Polyurethan-Elastomer-Polymer-Pulvers, wobei das Verfahren folgende Schritte aufweist:
- Verteilen des Pulvers (P) auf geprägtem Trennpapier (2),
- Erwärmen des Pulvers (P) auf den Erweichungspunkt, um eine letztendlich diskontinuierliche gesinterte Schicht (1) zu erhalten, und
- Abkühlen der gesinterten Schicht (1), um diese von dem temporären Träger (2) zu entfernen,
**dadurch gekennzeichnet, dass** das Pulver aus Partikeln mit einer Dimension im Bereich von 50 bis 80 Mikrometer (µm) gebildet wird und das Herstellungsverfahren keine Verwendung von Lösungsmittel beinhaltet.

2. Verfahren nach Anspruch 1,
**dadurch gekennzeichnet, dass** es eine Kopplungsphase der gesinterten Schicht (1) mit einem permanenten Träger (7) beinhaltet.

3. Verfahren nach Anspruch 1,
**dadurch gekennzeichnet, dass** das Pulver gebildet wird durch:
- Herstellung von Polyurethan-Elastomer-Polymer-Granulat, und
- Cryomahlung des Granulats zum Erzielen eines Pulvers (P) mit Abmessungen im Bereich von 50 bis 80 Mikrometer (µm).

4. Verfahren nach Anspruch 3,
**dadurch gekennzeichnet, dass** das Polyurethan-Elastomer-Polymer-Granulat gebildet wird durch Bereitstellen einer Mischung aus Diolen mit hohem Molekulargewicht und Glykolen, die erwärmt wird und mit Diphenylmet-handiisocyanat (MDI) reagiert, wobei die Mischung in eine Form gegossen wird, in der die Reaktion abgeschlossen wird, und das Produkt zum Bilden des Granulats gemahlen wird.

5. Verfahren nach Anspruch 4,
**dadurch gekennzeichnet, dass** die Diole mit hohem Molekulargewicht Polycarbonate und/oder Polyadipate beinhalten.

6. Verfahren nach Anspruch 5,
**dadurch gekennzeichnet, dass** die Polycarbonate Molekulargewichte zwischen 500 und 1000, vorzugsweise 750, aufweisen und die Polyadipate Molekulargewichte zwischen 500 und 1000, vorzugsweise 650, aufweisen.

7. Verfahren nach Anspruch 4,
**dadurch gekennzeichnet, dass** die Glykole mindestens eines der Folgenden beinhalten: Butandiol, Neopentyl-Glykol, Pentandiol und Hexandiol.

8. Verfahren nach Anspruch 1,
**dadurch gekennzeichnet, dass** das Polyurethan-Elastomer-Polymer-Pulver Benzoylchlorid als Additiv aufweist.

## Revendications

1. Procédé de production de cuir synthétique et enduit en général à l'aide d'une poudre polymère élastomère de polyuréthanne, comprenant les étapes suivantes :
- répandre la poudre (P) sur un papier anti-adhésif gaufré (2),
- chauffer la poudre (P) jusqu'à son point de ramollissement pour obtenir un film fritté (1) éventuellement discontinu, et
- refroidir le film fritté (1) afin de le séparer de son support temporaire (2), **caractérisé en ce que** la poudre est composée de particules de dimensions dans la plage de 50 à 80 micromètres (microns) et **en ce que** le procédé de production ne comprend pas l'utilisation de solvant.

2. Procédé selon la revendication 1, **caractérisé en ce qu'**il comprend une phase de couplage du film fritté (1) avec un support permanent (7).

3. Procédé selon la revendication 1, **caractérisé en ce que** ladite poudre est obtenue par :
- production de granulés polymères élastomères de polyuréthanne, et
- cryobroyage desdits granulés pour obtenir une poudre (P) ayant des dimensions comprises entre 50 et 80 micromètres (microns).

4. Procédé selon la revendication 3, **caractérisé en ce que** lesdits granulés polymères élastomères de polyuréthanne sont obtenus par préparation d'un mélange de diols de poids moléculaires élevés et de glycols qui est chauffé et réagit avec le diisocyanate de diphénylméthane (MDI), ledit mélange étant versé dans un moule dans lequel la réaction s'opère et le produit est broyé pour obtenir lesdits granulés.

5. Procédé selon la revendication 4, **caractérisé en ce que** lesdits diols de poids moléculaires élevés comprennent des polycarbonates et/ou des polyadipates.

6. Procédé selon la revendication 5, **caractérisé en ce que** lesdits polycarbonates ont des poids moléculaires compris entre 500 et 1000, de préférence 750, et lesdits polyadipates ont des poids moléculaires compris entre 500 et 1000, de préférence 650.

7. Procédé selon la revendication 4, **caractérisé en ce que** lesdits glycols comprennent au moins l'un des suivants : butanediol, néopentyl-glycol, pentanediol et hexanediol.

8. Procédé selon la revendication 1, **caractérisé en ce que** ladite poudre polymère élastomère de polyuréthanne comprend du chlorure de benzoyle à titre d'additif.
